# EUROPÄISCHE PATENTSCHRIFT

(11) **EP 0 951 334 B1**
(45) Veröffentlichungstag und Bekanntmachung des Hinweises auf die Patenterteilung: **12.09.2001**
(21) Anmeldenummer: 97900009.8
(22) Anmeldetag: 07.01.1997
(51) Int. Cl.: B01D 46/02, B01D 46/24

(54) **FILTER UND FILTERKORBBEFESTIGUNG**
FILTER AND FILTER BASKET SECURING DEVICE
FILTRE ET SYSTEME DE FIXATION DE PANIER FILTRANT

(30) Priorität: 29.03.1996 DE 19612578
(43) Veröffentlichungstag der Anmeldung: 27.10.1999
(73) Patentinhaber: BÜHLER AG, 9240 Uzwil (CH)
(72) Erfinder: LEHNER, Bernhard, CH-9014 St. Gallen (CH)
(74) Vertreter: Frommhold, Joachim, Dr.
(86) Internationale Anmeldenummer: CH9700003
(87) Internationale Veröffentlichungsnummer: WO9736668

(56) Entgegenhaltungen:
- CA-A- 1 131 566
- DE-U- 1 909 213
- DE-U- 8 102 411
- GB-A- 1 282 194
- GB-A- 2 287 660
- US-A- 3 513 638
- US-A- 3 680 285
- US-A- 3 973 935
- US-A- 4 618 420
- US-A- 5 308 369

## Beschreibung

Die Erfindung betrifft eine Filtervorrichtung mit einer Filterkorbbefestigung mit mindestens einem auswechselbaren, vorzugsweise im wesentlichen schlauchförmigen Filter oder Patronenfilter, das dicht und lösbar befestigt ist, wobei eine Boden- bzw. Deckenplatte (Zwischenboden) so in einem Gehäuse angeordnet ist, dass eine Reinluftseite von einer Staubseite der Filtervorrichtung getrennt ist. Die genannte Filterkorbbefestigung ist sowohl für ein sogenanntes Top- als auch Bottom- bzw. Sideremoval geeignet und findet Anwendung bei verschiedensten Filteraufgaben, z.B. in Getreidemühlen oder Trocknungsanlagen, z.B. für Granulate.

Derartige Filtereinrichtungen weisen schlauchförmige Filterelemente mit einem inneren Stützkorb auf, über den ein Filterschlauch gezogen ist (DE-C-39 39 645). Die Filterschläuche unterliegen einer Verschmutzung und einem Verschleiss im Betrieb und sind daher auswechselbar. Gemäss DE-C-39 39 645 wird dabei vorgeschlagen, die Stützkörbe am oberen Ende im Durchmesser zu reduzieren, so dass die Filterschläuche leicht vom Stützkorb gelöst werden können. Die DE-C-40 29 994 beschreibt eine ähnliche Filterpatrone mit einem langgestreckten Filterkorb, der ein Befestigungsende und ein offenes, freies Korbende aufweist, sowie einen Filterschlauch, der an der Aussenseite des Filterkorbes abgestützt ist, an dessen Befestigungsende offen ist, und am freien Korbende umgestülpt ist, sich innerhalb des Filterkorbes wiederum mit einem verminderten Schlauchdurchmesser in Richtung zum Befestigungsende des Filterkorbes zurückerstreckt, wobei der Filterkorb einen zusätzlichen Innenkorb aufweist, der sich zum Befestigungsende konisch verjüngt, und wobei sich der innere Teil des Filterschlauches an der Innenseite dieses Innenkorbes abstützt.

In der DE-A-33 04 135 sind hierbei Dichtelemente beschrieben, die eine Abdichtung des Reingasraumes vom staubbeladenen Filterraum ermöglicht. Hierzu ist der Filterschlauch am Deckelblech so zwischen einem Dichtrahmen und dem eine Trennwand bildenden Deckel eingeklemmt, dass er als Dichtelement wirkt.

Die DE-A-38 12 790 beschreibt eine Vorrichtung zur Befestigung von Filtereinsätzen in den Öffnungen einer Kopfplatte bzw. eines Filterbodens einer Filterdecke oder einer Filterwandung bei Schlauchfilteranlagen, wobei ein Filtereinsatz mindestens aus einem Stützkorb sowie einem Spannbügel und einem Filterschlauch besteht und an der Kopfplatte befestigbar ist. Bevorzugt weist der Filterschlauch einen Wulst auf, so dass beim Spannen des Spannbügels und mittels einer Randwölbung des Deckels eine Dichtwirkung erzeugt wird. Nach der DE-C-816 852 erfolgt die Befestigung des Filterschlauches mittels gegeneinander verschiebbarer Kegelflächen.

Gemäss der DE-A-35 01 948 ist es bei einer Staubfiltervorrichtung gegeben, einen Filter mit einer Platte nach der Staubseite hin aus dem Filtergehäuse zu entfernen, wobei das untere Gehäuseteil vom übrigen Gehäuse lösbar ist.

Nach der DE-A-38 11 929 enthält ein Filtergehäuse ein Haltesystem, welches als Kreuzrost ausgebildet ist, der aus rechtwinklig im Abstand angeordneten hochkantigen Blechen besteht und somit begrenzte Filter bildet. Nach der DE-A-37 09 365 ist ein schlauchförmiger Filtertuchkörper auf seiner axialen Erstreckung an mindestens einer Stelle unterteilt ausgebildet, wobei an dieser Unterteilungsstelle eine lösbare Verbindung vorgesehen ist.

Ähnliche Einrichtungen zur Befestigung von hängigen Filterschläuchen mittels einer Klemmvorrichtung zeigt die EP-B-337 061, wobei auch hier ein umlegbarer Spannbügel verwendet wird, und wobei U-förmige Bügel der Klemmvorrichtung in einer Sicke des Filterstutzens aufgenommen sind.

Sickenartige Versteifungen bzw. Aufnahmen von Dichtelementen zeigt auch die DE-A-31 49 381. Einen Staubgasfilter mit einem durchgehenden, für mehrere Reingaskanäle gemeinsam ausgebildeten Schlauchboden, ist in der DE-A-25 36 568 beschrieben, wobei im Schlauchboden nach oben in die Reingaskanäle ragende Halteteile befestigt sind, in die von oben die Filterschläuche einzeln herausnehmbar und einführbar, und mittels einem versteiften Rand gehalten sind.

Die DE-U-81 02 411 offenbart einen Schlauchfilter, dessen Rohrstutzen mittels eines gasdichten Kragens über niederspannbare Profilleisten bündig auf einen Filterboden befestigt sind. Ein topremoval ist nur mit hohem Aufwand und eingeschränkt möglich.

Einen weitereren Filterschlauch lehrt die DE-U-19 09 213, bei dem oben und unten Spiralzugfederringe angeordnet sind, um dem Filterschlauch durch Einsatzstücke hindurch in Lochplatten einsetzen zu können. Ähnliches beschreibt die US-A-5,308,369.

Gemäss US-A-3,973,935 bzw. CA-A-1,131,566 werden die Stutzen von Filterschläuchen mittels Spannstücken befestigt, wobei die spezifischen Lösungen einen hohen Montageaufwand erfordern. Die US-A-3,680,285 beschreibt eine bajonnettartige Fixierung über Aussparungen im Zwischenboden.

Die US-A-3,973,935 wiederum beschreibt eine Filtervorrichtung mit mindestens einem, einen Filterkorb und einen Filterschlauch aufweisenden schlauchförmigen Filterelement, welches in einem Filtergehäuse in einer Filterkammer angeordnet ist, wobei ein Rohgasraum durch einen Zwischenboden, welcher einen Deckel oder Boden darstellt, von einem Reingasraum getrennt ist, und wobei der Filterkorb und der Filterschlauch in einer Öffnung im Zwischenboden aufgenommen und über eine Filterkorbbefestigung an diesem befestigt ist. Hierbei sind entsprechend der Anzahl von Öffnungen im Zwischenboden zur Aufnahme von Filterkörben voneinander beabstandete Fixationsteile angeordnet.

Weiterhin beschreibt die DE-A-31 26 300 einen Filter mit einem Schlauchmantel, auf dem Stützringe mit Hilfe von Gurtbändern befestigt sind, wobei die Stützringe mit den Gurtbändern verbunden sind.

Den beschriebenen Lösungen nach dem Stand der Technik ist gemeinsam ein komplizierter Aufbau der Filterkorb- bzw. Schlauchbefestigung, wobei zumeist die Befestigungselemente, sofern sie aussen auf den Filterschläuchen bzw. Filterkörben angeordnet sind, einen grösseren Durchmesser als diesen selbst aufweisen und daher nur aufwendig ein- und ausbaubar sind.

Die Aufgabe der vorliegenden Erfindung besteht nun darin, die beschriebenen Nachteile des Standes der Technik zu beseitigen und eine Filtervorrichtung mit einer Filterkorbbefestigung hierzu zu entwickeln, der eine vereinfachte Montage und Demontage von Schlauchfiltern sowie deren Fixierung im Filtergehäuse, insbesondere beim sogenannten Topremoval aber auch bei Bottom- bzw. Sideremoval ermöglicht.

Die Lösung erfolgt anhand der Kennzeichen des Anspruchs 1. Vorteilhafte Ausgestaltungen sind in den nachfolgenden Ansprüchen wiedergegeben. Ausgehend vom vorbeschriebenen Stand der Technik waren vielfältige Detailuntersuchungen notwendig, in deren Verlauf sich zeigte, dass die erfindungsgemässe Aufgabe weder einzeln noch in Zusammenschau lösbar war. So gelang es doch überraschenderweise mit einfachen Mitteln, sowohl das Problem der Schlauchbefestigung am Filterkorb und der Abdichtung zum Reingasraum als auch einer schnellen Montage und Demontage vor Ort, ohne Zuhilfenahme weiterer Werkzeuge (Top-removal) hierzu, zu lösen.

Nach der erfindungsgemässen Filtervorrichtung weist der Korbstutzen der Filterkorbbefestigung ebenfalls eine Anlagefläche auf, so dass Spannen und Dichten getrennt erfolgen können. Dies insbesondere dann, wenn das vorbeschriebene Drehen unter Last kritisch ist. Am Boden sind hierzu die Rippen als bewegliche Rippen mit Schlitzen angeordnet. Das Eindrehen zum Spannen und Abdichten erfolgt mit einem Bolzen am Korbstutzen und einer Exzenterarretierung. Die Dichtung erfolgt wiederum an den Auflageflächen des Korbstutzens.

Durch den Spannexzenter können alle Filterkörbe rechts und links von einer Schiene (reihenweise) arretiert werden, so dass minimal zwei Spannexzenter je Reihe erforderlich sind.

Die erfindungsgemässe Lösung ist analog auch für z.B. Patronenfilter anwendbar.

Ebenfalls bevorzugt werden das Befestigungselement bzw. der Verbinder (z.B. Klettband, Stahlband, Metallverbinder) und der Schlauch aus denselben Materialien hergestellt, so dass bei Verwendung zugelassener Filtermaterialien keine erneute Prüfung u.dgl. erforderlich ist. Um die Verbindung zwischen Filterschlauch und Filterkorb herzustellen, erfolgt nicht nur eine Anordnung des Befestigungselementes oder des Verbinders in einer Sicke über den Filterschlauch, sondern zugleich auch ein Umnähen, oder Schweissen oder Kleben des Filterschlauchrandes. Die durch die Sicke verursachte Verringerung des Filterkorbdurchmessers ist vernachlässigbar, so dass keine unvorteilhafte Beeinflussung der Druckverhältnisse im Filterkorb bzw. Filterschlauch entsteht. Eine zuverlässige Abdichtung zwischen Rohgas- und Reingasraum wird einfach durch ein U-förmiges Dichtelement in der Öffnung des Bodens bzw. Dekkels (Zwischenboden) für den Einsatz des Filterkorbes erreicht. Denkbar sind aber auch aufgespritzte Dichtelemente.

Die Filterkorbbefestigung einer Filtervorrichtung, insbesondere eines Schlauchfilters kann dabei eine Konfiguration aufweisen, bei der der Aussendurchmesser des fixierten Verbinders geringer als der Durchmesser der Öffnung im Zwischenboden zur Aufnahme des Korbstutzens ist, und der Korbstutzen des Filterkorbes eine flache Sicke aufweist, wobei das schlauchförmige Filterelement mit einem Befestigungselement bzw. Verbinder ein Klettband oder Metall- bzw. Kunststoffband ist.

Darüberhinaus ist es möglich, den Standardisierungsgrad derartiger Baugruppen zu erhöhen.

In einer weiteren Variante, die nicht unter die Ansprüche der vorliegenden Erfindung fällt, ist durch die Anordnung von Fixationsteilen, durch welches im Verbund mit weiteren Fixationsteilen bei rechteckiger Anordnung der Filterkörbe jeweils maximal vier Filterkörbe positioniert und fixiert werden können, eine einfache Montage und Demontage, sowohl seitlich als auch in axialer Richtung möglich. Das Fixationsteil selbst wird bevorzugt über Rippen des Bodens bzw. Deckels (Zwischenboden) des Filtergehäuses positioniert, was ebenfalls eine einfache Herstellung ermöglicht. Bei versetzter Anordnung der Filterkörbe ist auch eine geringe Anzahl als 4 Fixationsteile möglich. Bei Side- und insbesondere bei Bottom-removal kann es vorteilhaft sein, am bzw. auf dem Korbstutzen eine konische Zentrierhilfe, z.B. steckbar, anzuordnen.

Insgesamt ist dadurch eine Konstruktion geschaffen, die ein einfaches Durchstecken des Filterschlauches bzw. -korbes durch die Boden- bzw. Deckelöffnung ermöglicht. Durch nachfolgendes Drehen um ca. 20 - 30° ist dann der Filterkorb zuverlässig im Filtergehäuse fixiert.

Die Erfindung wird nachfolgend anhand einer Zeichnung näher beschrieben. In der Zeichnung zeigen die
- Fig. 1:: eine Draufsicht auf den Deckel eines Schlauchfiltergehäuses für Top-Removal (Ausschnitt)
- Fig. 2:: ein Schnittbild hierzu in Seitenansicht und
- Fig. 3:: eine adäquate Seitenansicht zur Fig. 2 für Side- bzw. Bottom-Removal
- Fig. 4: Schnittdarstellung der Filterkorbbefestigung einer Filtervorrichtung mittels Spannexzenter und Schiene (Ausschnitt)
- Fig. 5: Draufsicht der Darstellung nach Fig. 4
- Fig. 6: Filterkorbgestaltung (gemäss Fig. 4).

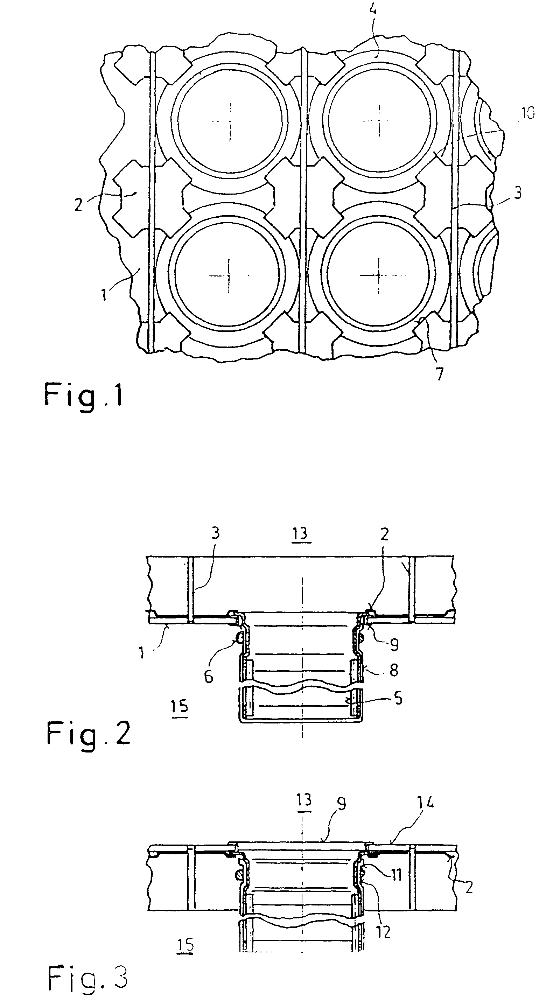

Die in der Ausführungsform gemäss Fig. 1 bis 3 gezeigte Anordnung von Fixationsteilene fällt nicht unter die Ansprüche.

In einem nicht explizit dargestellten Filtergehäuse ist in an sich bekannter Weise ein Zwischenboden in Form eines Deckels 1 für die Aufnahme und Fixation von Schlauchfiltern angeordnet. Im erforderlichen Masse sind auf dem Deckel 1 gleichmässig beabstandete Fixationsteile 2 angeordnet, die lediglich durch Rippen 3 in ihrer Lage fixiert sind. Die Rippen 3 wiederum sind lagestabil und fest mit dem Deckel 2 verbunden. Der Korbstutzen 4 des Filterkorbes 5 ist so ausgebildet, dass eine sichere Auflage bzw. Anlage auf dem Deckel 1 gegeben ist. Der Korbstutzen 4 ist hierbei mit Aussparungen 7 versehen, die geringfügig breiter als die entsprechenden Teile des Fixationsteiles 2 sind. Durch einfaches Verdrehen des Korbstutzens 4 um ca. 20 - 30° wird eine bajonettverschlussartige Fixation des Filterkorbes 5 erreicht.

Zur Vereinfachung dieses Verdrehens sowie auch für einen sicheren Halt sind Ecken 10 des Fixationsteiles 2 mit einer sägeartigen Schränkung versehen. Der Filterkorb 5 mit dem Filterschlauch 8 braucht lediglich durch eine entsprechende Öffnung des Deckels 1 von oben in den nicht explizit dargestellten Rohgasraum 15 des Filtergehäuses eingeführt werden.

Der Filterschlauch 8 ist in bekannter Weise mit einem Filterkorb 5 versehen, wobei das untere Ende des Filterschlauches einfach bodenlos zusammengenäht ist, und das dem Korbstutzen 4 des Filterkorbes 5 zugewandte Ende des Filterschlauches 8 umnäht ist in Form einer Randverstärkung 11. Der Filterschlauch 8 wird mittels eines Klettbandes 6 in einer Sicke 12 des Korbstutzens 4 abzugsicher mit dem Filterkorb 5 verbunden.

Die Tiefe der Sicke 12 ist so gewählt, dass einerseits das Klettband keinen nennenswert grösseren Aussendurchmesser als der Filterschlauch 8 selbst bewirkt und im Inneren des Filterkorbes zugleich keine unzulässigen Druckdifferenzen verursacht werden.

Zur Erreichung der erforderlichen Abdichtung zwischen Reingasraum 13 des Filtergehäuses und dem Rohgasraum 15 ist eine einfache U-förmige Dichtung 9 entsprechend dem Umfang der Öffnung im Deckel 1 verlegt. Durch Drehung des Korbstutzens 4 erfolgt neben dessen Fixation somit zugleich eine drucksichere Auflage.

Die Figur 3 zeigt eine adäquate Darstellung für Side-(Bottom-)Removal, wobei lediglich die entsprechende Anordnung auf einem Boden 14 des Filtergehäuses erfolgt.

Zur Vereinfachung der Drehung des Korbstutzens 4 des Filterkorbes 5 sowie zur Vereinfachung der Montage und Demontage im Deckel 1 kann im weiteren ein geeignetes, nicht dargestelltes Griffelement am Korbstutzen 4 angeordnet sein.

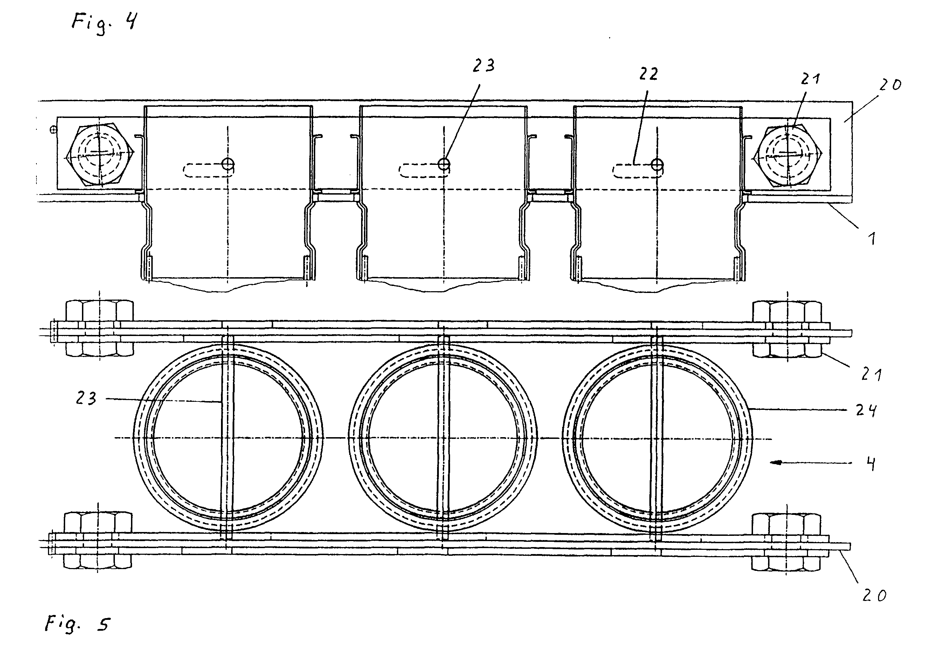

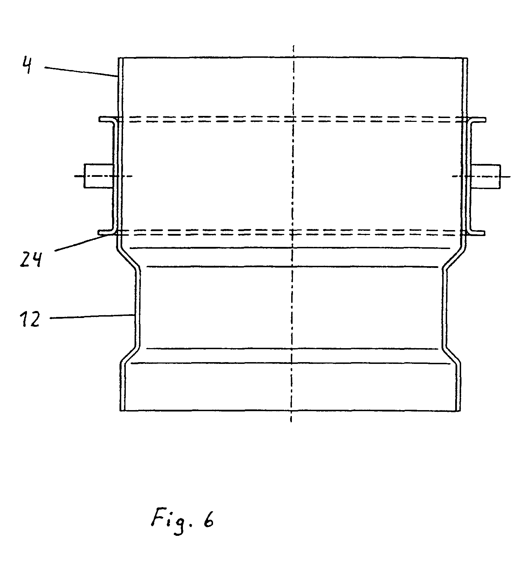

Nach dem Ausführungsbeispiel gemäß der vorliegenden Erfindung (siehe Figuren 4 bis 6) sind die Rippen als bewegliche Rippen mit Schlitzen 22 ausgeführt. An den Enden einer jeden Rippe sind Spannexzenter 21 angeordnet. Der Korbstutzen 4 ist mit einem Bolzen 23 versehen, der parallel in den Schlitzen 22 einer Rippe (Schiene 20) geführt ist. Der Filterkorb wird mit den Bolzen 23 der Korbstutzen 4 in die Schlitze 22 eingedreht. Durch nachfolgende Bewegung des Spannexzenters 21 werden die Schienen 20 in Richtung auf den Deckel 1 (bzw. Boden 14) gedrückt, wobei die Auflageflächen 24 des Korbstutzens gleichfalls auf den Deckel 1 (bzw. Boden 14) gedrückt werden, so dass ein Spannen und Abdichten in der vorbeschriebenen Weise erfolgt.

### Aufstellung der Bezugszeichen

- 1: Deckel
- 2: Fixationsteil
- 3: Rippe
- 4: Korbstutzen
- 5: Filterkorb
- 6: Klettband
- 7: Aussparung
- 8: Filterschlauch
- 9: Dichtung
- 10: Ecke
- 11: Randverstärkung
- 12: Sicke
- 13: Reingasraum
- 14: Boden
- 15: Rohgasraum
- 20: Schiene
- 21: Spannexzenter
- 22: Schlitz
- 23: Bolzen
- 24: Auflagefläche

## Patentansprüche

1. Filtervorrichtung mit Filterkorbbefestigung mit mindestens einem schlauchförmigen Filterelement, welches in einem gemeinsamen Filtergehäuse in einer Filterkammer angeordnet ist, wobei ein Rohgasraum (15) durch einen Zwischenboden, der einen Deckel (1) bzw. Boden (14) darstellt, von einem Reingasraum (13) getrennt ist und der/die Filterkörbe (5) sowie Filterschläuche (8) im Zwischenboden (1, 14) aufgenommen und befestigt sind, wobei am Zwischenboden reihenweise beabstandet, spannbare Schienen (20) angeordnet sind um den Korbstutzen (4) bündig am Zwischenboden zu befestigen,
**dadurch gekennzeichnet, dass** die Schienen (20) als horizontal und vertikal bewegliche und auf Höhe eines jeden Filterkorbes (5) mit Schlitzen (22) versehene Rippen angeordnet sind, wobei an den Enden der Schienen (20) Spannexzenter (21) vorgesehen sind und dass weiterhin die Korbstutzen (4) der Filterkörbe (5) Auflageflächen (24) aufweisen und dass sie mit Bolzen (23) versehen sind, die in die Schlitze (22) eingreifen.

2. Filtervorrichtung nach Anspruch 1, **dadurch gekennzeichnet, dass** die Korbstutzen (4) die Auflageflächen (24) zur Auflage am Zwischenboden aufweisen.

3. Filtervorrichtung nach Anspruch 1, **dadurch gekennzeichnet, dass** der Korbstutzen (4) mit einer konischen Zentrierhilfe versehen ist.

4. Filtervorrichtung nach Anspruch 1, **dadurch gekennzeichnet**, eine U-förmige Dichtung (9) vorgesehen ist, welche zwischen dem Korbstutzen (4) und dem Deckel (1) bzw. Boden (14) bzw. am Korbstutzen (4) selbst angeordnet ist.

5. Filtervorrichtung nach Anspruch 1, **dadurch gekennzeichnet, dass** eine Öffnung des Filterschlauches (8) mit einer Randverstärkung (11) versehen ist.

6. Filtervorrichtung nach Anspruch 5, **dadurch gekennzeichnet, dass** die Randverstärkung (11) durch Umnähen des Randes des Filterschlauches (8) gebildet ist.

7. Filtervorrichtung nach Anspruch 1 bis 5, **dadurch gekennzeichnet, dass** die andere Öffnung des Filterschlauches (8) bodenlos vernäht, verschweisst oder geklebt ist.

8. Filtervorrichtung nach Anspruch 1, **dadurch gekennzeichnet, dass** der Korbstutzen (4) des Filterkorbes (5) eine flache Sicke (12) für ein Befestigungselement aufweist.

9. Filtervorrichtung nach Anspruch 8, **dadurch gekennzeichnet, dass** der Aussendurchmesser eines fixierten Befestigungselementes für den Filterschlauch (8) am Korbstutzen geringer als der Durchmesser der Öffnung im Zwischenboden (1, 14) zur Aufnahme des Korbstutzens (4) ist.

## Claims

1. A filtering apparatus with a filter basket fixing means with at least one tubular filter element which is arranged in a filter chamber in a common filter housing, with the crude gas chamber (15) being separated from a clean gas chamber (13) by way of a false bottom which represents a lid (1) or a floor (14) and the filter basket(s) (5) and the filter tubes (8) being received by and fastened in the false bottom (14), with tensible rails (20) which are spaced from one another in rows being arranged on the false floor in order to fasten the connection piece (14) of the basket in a flush manner on the false bottom, **characterized in that** the rails (20) are arranged as ribs which are horizontally and vertically movable and are provided at the height of each filter basket (5) with slots (22), with tensioning eccentrics (21) being provided at the ends of the rails (20) and that further the connection pieces (4) of the filter baskets (5) are provided with bearing surfaces (24) and are provided with bolts (23) which engage in the slots (22).

2. A filtering apparatus as claimed in claim 1, **characterized in that** the connection pieces (4) of the basket comprise the bearing surfaces (24) for support on the false bottom.

3. A filtering apparatus as claimed in claim 1, **characterized in that** the connection piece (4) is provided with a conical centering aid.

4. A filtering apparatus as claimed in claim 1, **characterized in that** a U-shaped seal (9) is provided which is arranged between the connection piece (4) and the lid (1) or floor (14), or on the connection piece (4) per se.

5. A filtering apparatus as claimed in claim 1, **characterized in that** an opening of the filter bag (8) is provided with an edge reinforcement (11).

6. A filtering apparatus as claimed in claim 5, **characterized in that** the edge reinforcement (11) is formed by sewing around the edge of the filter bag (8).

7. A filtering apparatus as claimed in claim 1 to 5, **characterized in that** the other opening of the filter bag (8) is floorlessly sewn, welded or glued.

8. A filtering apparatus as claimed in claim 1, **characterized in that** the connection piece (4) of the filter basket (5) comprises a flat bead (12) for a fastening element.

9. A filtering apparatus as claimed in claim 8, **characterized in that** the outside diameter of a fixed fastening element for the filter bag (8) is smaller on the connection piece than the diameter of the opening in the false bottom (1, 14) for receiving the connection piece (4).

## Revendications

1. Dispositif de filtration avec fixation du panier de filtre, comportant au moins un élément filtrant tubulaire disposé dans un corps de filtre commun dans une chambre de filtration, un espace destiné au gaz brut (15) étant séparé d'un espace destiné au gaz épuré (13) par un fond intermédiaire représentant à la fois un couvercle (1) et un fond (14), et le ou les paniers de filtre (5) et manchons de filtre (8) étant logés et fixés dans le fond intermédiaire, des rails (20) pouvant être serrés étant prévus pour fixer le collier du panier (14) de niveau sur le fond intermédiaire,
**caractérisé en ce que** les rails (20) forment des nervures mobiles horizontalement et verticalement et pourvues de fentes (22) au niveau de chaque panier de filtre (5), des excentriques de serrage (21) étant prévus aux extrémités des rails (20), en ce que les colliers (4) des paniers de filtre (5) présentent des surface d'appui (24) et en ce qu'ils sont pourvus de boulons (23) qui se mettent en prise dans les fentes (22).

2. Dispositif de filtration selon la revendication 1, **caractérisé en ce que** les colliers de panier (4) présentent des surfaces d'appui (24) destinées à l'appui sur le fond intermédiaire.

3. Dispositif de filtration selon la revendication 1, **caractérisé en ce que** le collier de panier (4) est pourvu d'un moyen d'aide au centrage conique.

4. Dispositif de filtration selon la revendication 1, **caractérisé en ce qu'**il est prévu un joint d'étanchéité en U (9) qui est disposé entre le collier de panier (4) et le couvercle (1) ou le fond (14), ou bien sur le collier de panier (4) même.

5. Dispositif de filtration selon la revendication 1, **caractérisé en ce qu'**une ouverture dans le manchon de filtre (8) est pourvue d'un renfort de bord (11).

6. Dispositif de filtration selon la revendication 5, **caractérisé en ce que** le renfort de bord (11) est formé par retournement et couture du manchon de filtre (8).

7. Dispositif de filtration selon les revendications 1 à 5, **caractérisé en ce que** l'autre ouverture du manchon de filtre (8) est cousue, soudée ou collée sans former de fond.

8. Dispositif de filtration selon la revendication 1, **caractérisée en ce que** le collier (4) du panier de filtre (5) présente une moulure (12) de faible relief pour un élément de fixation.

9. Dispositif de filtration selon la revendication 8, **caractérisé en ce que** le diamètre extérieur d'un élément de fixation de manchon de filtre (8) fixé sur le collier de panier est plus petit que le diamètre de l'ouverture dans le fond intermédiaire (1, 14) recevant le collier de panier (4).
